# EUROPEAN PATENT SPECIFICATION

(11) **EP 3 536 931 B1**
(45) Date of publication and mention of the grant of the patent: **02.08.2023**
(21) Application number: 19160095.6
(22) Date of filing: 28.02.2019
(51) Int. Cl.: F02C 7/052, F01D 9/04, F01D 9/06, F01D 25/32

(54) **DIRT COLLECTION FOR GAS TURBINE ENGINE**
SCHMUTZSAMMLUNG FÜR GASTURBINENMOTOR
COLLECTE DE SALETÉ POUR MOTEUR À TURBINE À GAZ

(30) Priority: 28.02.2018 US 201815907450
(43) Date of publication of application: 11.09.2019
(73) Proprietor: Raytheon Technologies Corporation, Farmington, CT 06032 (US)
(72) Inventor: LOVETT, Jeffery A., Tolland, CT Connecticut 06084 (US)
(74) Representative: Dehns

(56) References cited:
- EP-A1- 3 165 712
- EP-A2- 1 510 659
- FR-A1- 2 703 401
- US-A- 3 673 771
- US-A- 3 720 045

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-temperature and pressure gas flow. The hot gas flow expands through the turbine section to drive the compressor and the fan section.

During operation of a gas turbine engine in harsh environments, it is possible for the engine to ingest debris, such as sand and dirt, into the core flow path through the gas turbine engine. Although some of the debris may travel all the way through the engine and be exhausted out of the engine, a portion of the debris may adhere to surfaces within the gas turbine engine which can disrupt and block cooling holes and passages. The combustor section is particularly susceptible to this contamination because of the high temperatures of the combustor hardware and the typical use of many small cooling holes to direct cooling air and provide thermal protection. Therefore, there is a need to reduce the amount of dirt and sand which reaches the combustor of the gas turbine engine.

EP 3 165 712 A1 discloses a diffuser for a gas turbine engine according to the preamble of claim 1, and a method according to the preamble of claim 12.

US 3 673 771 A discloses a multi-channel particle separator, and FR 2 703 401 A1 discloses a turbomachine equipped with a device indicating the quantity of absorbed particles.

### SUMMARY

According to a first aspect, there is provided a diffuser for a gas turbine engine as set forth in claim 1.

In an embodiment of the above, the plurality of airfoils extend in a circumferential direction through the annular fluid passage.

In a further embodiment of any of the above, the plurality of airfoils are supported by struts that extend in a radial direction through the annular fluid passage and the struts include a strut collection surface.

In a further embodiment of any of the above, a leading edge of each of the airfoils includes at least one of a resistive heat strip or a bleed air passage.

In a further embodiment of any of the above, a cross-sectional area of the plurality of airfoils is greater than 50% of the cross-sectional area of the annular fluid passage.

In a further embodiment of any of the above, the annular fluid passage includes a high velocity region that has a cross-sectional area that is axially upstream of a diffusion region that has a larger cross-sectional area than the high velocity region. The plurality of airfoils are located in the high velocity region.

In a further embodiment of any of the above, a leading edge of each of the plurality of airfoils includes a recess defined by a pair of leading edge protrusions.

In a further embodiment of any of the above, the plurality of airfoils are removable from the diffuser.

There is also provided a gas turbine engine as set forth in claim 10.

In an embodiment of the above, the annular fluid passage includes a high velocity region that has a cross-sectional area that is axially upstream of a diffusion region that has a larger cross-sectional area than the high velocity region. The plurality of airfoils are located in the high velocity region.

In a further embodiment of any of the above, the plurality of airfoils include an upstream portion that has a greater thickness than a trailing edge. There are a greater number of the plurality of airfoils than at least one splitter.

In a further aspect, there is provided a method as set forth in claim 12.

In an embodiment of the above, the annular fluid passage includes a high velocity region that has a cross-sectional area that is axially upstream of a diffusion region that has a larger cross-sectional area than the high velocity region. The plurality of airfoils are located in the high velocity region.

In a further embodiment of any of the above, the method includes heating the plurality of airfoils to promote debris to collect on the leading edge.

In a further embodiment of any of the above, a cross-sectional area of the plurality of airfoils is greater than or equal to 50% of a cross-sectional area of the annular fluid passage. The plurality of airfoils include an upstream portion that has a greater thickness than a trailing edge.

In a further embodiment of any of the above, the method includes manipulating a flow of air entering the diffuser with at least one splitter located axially forward and spaced from the plurality of airfoils. There are a greater number of the plurality of airfoils than at least one splitter.

### BRIEF DESCRIPTION OF THE DRAWINGS

Figure 1 is a schematic view of an example gas turbine engine according to a first non-limiting example.
Figure 2 is a partial enlarged view of a compressor exit section and a combustor section illustrating a plurality of collection airfoils in an example configuration.
Figure 3 is an enlarged view of an airfoil illustrating a plurality of collection airfoils in another example configuration.
Figure 4 illustrates a cross-sectional view of one of the plurality of collection airfoils.

### DETAILED DESCRIPTION

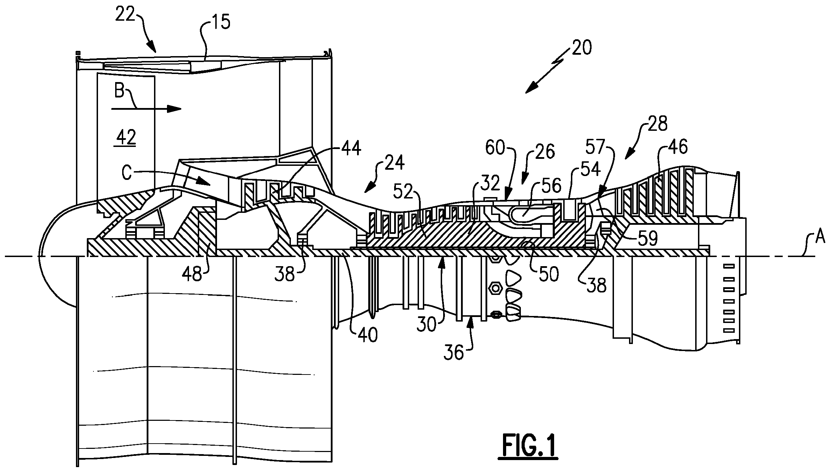

Figure 1 schematically illustrates a gas turbine engine 20. The gas turbine engine 20 is disclosed herein as a two-spool turbofan that generally incorporates a fan section 22, a compressor section 24, a diffuser 60, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A diffuser 60 is used to transfer the high velocity air stream from the compressor 52 to the combustor 26 by slowing and diffusing the air stream down to a lower velocity before entering the combustor 26. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, diffused to lower velocity in the diffuser 60, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K × ⁹/₅). The "Low corrected fan tip speed" as disclosed herein according to one non-limiting embodiment is less than about 1150 ft / second (350.5 meters/second).

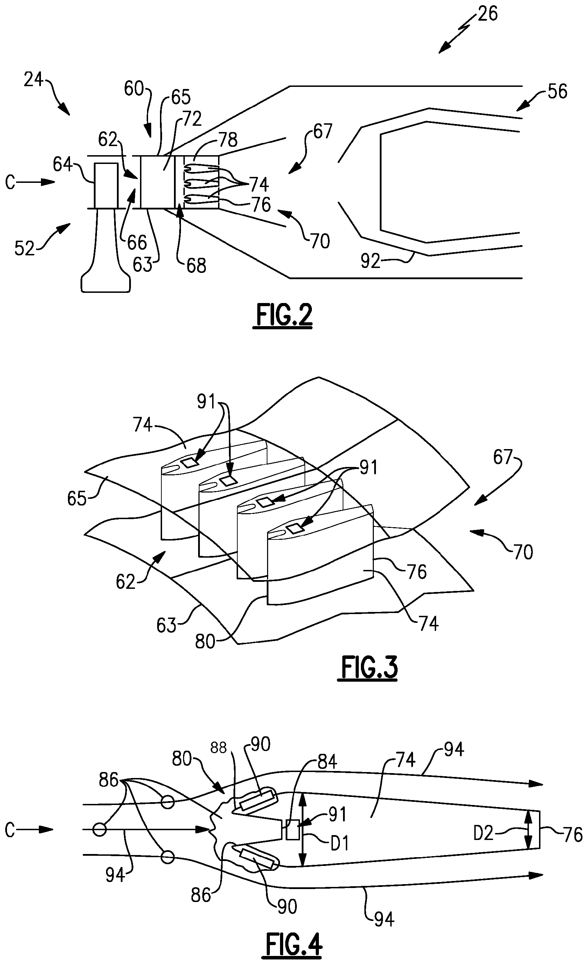

Figure 2 illustrates an enlarged schematic view of a portion of the compressor section 24 and a portion of the combustor section 26 showing the diffuser 60. As air traveling through the core flow path C is compressed in the compressor section 24, it enters an annular fluid passage 62 of the diffuser 60 at high velocities where it is manipulated to expand to lower velocities in an expanding flowpath 70 before the air reaches the combustor 56. The annular fluid passage 62 is defined by an inner ring 63 and an outer ring 65. In the illustrated example, only a downstream most rotor stage 64 in the high pressure compressor 52 is shown, however, the high pressure compressor 52 includes multiple stages as shown in Figure 1.

The diffuser 60 includes an inlet 66 to the annular fluid passage 62 having an annular inlet cross-sectional area and an outlet 67 of the annular fluid passage 62 having an annular outlet cross-sectional area that is much larger than the annular inlet cross-sectional area thereby reducing the air stream velocity. Additionally, immediately downstream of the inlet 66, the annular fluid passage 62 contains multiple radial struts 72 in the flowpath needed to mechanically connect the inner ring 63 and outer ring 65. The flow blockage due to these struts further increases the air stream velocity in the diffuser annular section between the inlet 66 and a following annular section 68. The annular section 68 following the struts 72 has a cross-sectional area that is either identical to the annular inlet cross-sectional area or within 10% of the annular inlet cross-sectional area so the air stream remains at a high velocity. The annular section 68 transitions into the expanding flowpath 70 where the cross-sectional area increases from the cross-sectional area of the high velocity region 68 to the larger annular outlet cross-sectional area of the outlet 67 thereby decreasing the air stream velocity before reaching the combustor section 56.

When the air from the core flow path C enters the diffuser 60, the struts 72 typically turn the air to correct for a rotational direction imparted on the air as a result of compression by the rotors in the compressor section 24. The struts 72 are located immediately downstream from the inlet 66 of the annular fluid passage 62 in the high velocity region 68. Since the air velocity in annular fluid passage 62 of the diffuser 60 is very high, it presents the opportunity to collect the dirt or sand existing in the air stream since adhesion is enhanced by high velocities. A plurality of collection airfoils 74 are located immediately downstream and spaced from the struts 72 such that the plurality of collection airfoils 74 are axially separated from the struts 72. The plurality of collection airfoils 74 are also located in the high velocity region 68. However, it is possible that a portion of a trailing edge 76 of one of the plurality of collection airfoils 74 extends into the expanding flowpath 70 of the annular fluid passage 62. The collection airfoils 74 collect a significant portion of the sand and dirt in the core stream preventing the debris from entering the combustor 56. The collection airfoils 74 can either remain in place, or in another embodiment, they can be removed from the engine to allow cleaning of the airfoils and re-insertion into the diffuser 60 as a maintenance capability. The collection airfoils 74 could also be integrated with the mechanical support struts 72.

In the illustrated non-limiting example shown in Figure 2, the plurality of collection airfoils 74 extend in a circumferential direction through the annular fluid passage 62. The plurality of collection airfoils 74 are supported in the annular fluid passage 62 by multiple struts 78 extending in a radial direction such that the plurality of collection airfoils 74 form circumferential segments defined by the struts 78. In the illustrated non-limiting example shown in Figure 3, each of the plurality of collection airfoils 74 extend in a radial direction between the radially inner ring 63 and the radially outer ring 65 of the diffuser 60.

In one example, the plurality of collection airfoils 74 include a cross-sectional area that is equal to or greater than 25% of a cross-sectional area of the annular fluid passage 62 to increase the air stream velocity and increase debris impact and adhesion. In another example, the plurality of collection airfoils 74 include a cross-sectional area that is equal to or greater than 50% of a cross-sectional area of the annular fluid passage 62 to further increase the air stream velocity. The collection airfoils 74 are aerodynamically shaped to include an airfoil type cross section to end with a thin trailing edge 76 to smoothly diffuse the air stream and minimize pressure losses created by the collection airfoils 74.

As shown in Figure 4, which is a cross-sectional view of one of the plurality of collection airfoils 74, each of the collection airfoils 74 includes an airfoil type cross section. In the illustrated example, a portion of collection airfoil 74 near a leading edge 80 includes a thickness D1 that is greater than a thickness D2 of the collection airfoil 74 at or near a trailing edge 76. The plurality of collection airfoils 74 may also include a symmetric profile about a plane extending in a longitudinal direction.

The leading edge 80 of each of the plurality of collection airfoils 74 may include a recess 84 defined by a pair of leading edge protrusions 86 to increase the debris collection capacity of the collection airfoil 74. In the example of Figure 2 where the plurality of collection airfoils 74 extend in a circumferential direction, the recess 84 would also extend in a circumferential direction. Similarly, in the example of Figure 3 wherein the plurality of collection airfoils 74 extend in a radial direction, the recess 84 would also extend in a radial direction. In this disclosure, axial or axially, circumferential or circumferentially, and radial or radially is in relation to the engine axis A unless stated otherwise.

According to an embodiment of the invention, the leading edge of the plurality of collection airfoils does not have the recess 84, which contributes to collection of debris 86 traveling through the diffuser 60, but instead includes a surface treatment 88, such as a surface texture or special material coating to encourage the collection of debris 86. Special materials that include catalytic chemical reactions or particle charge attraction could be used to enhance collection of debris at the leading edge. In another example, the surface treatment 88 is applied in the area of the recess 84.

Also, in addition to or in place of the surface treatment 88, the plurality of collection airfoils 74 could be heated, such as by at least one resistive heat strip 90 integrated into the leading edge 80 or through the use of bleed air in a bleed air passage 91. A heated surface according to another embodiment of the invention will increase the collection effectiveness of the leading edge 80 of the collection airfoils 74. Additionally, the strut 78 could include the same treatment along a leading edge as the plurality of collection airfoils 74.

As shown in Figure 4, when the air traveling through the core flow path C approaches one of the collection airfoils 74, a direction of flow of the core flow path C changes. When the core flow path C includes debris 86, the change in direction of the core flow path C along flow lines 94 results in the debris 86 resisting that change indirection because of momentum and the debris 86 comes into contact with the collection airfoil 74. When the debris 86 contacts the collection airfoil 74, the debris 86 will adhere to the collection airfoil 74 due to the high temperature of the collection airfoil 74 and/or because of the force of impact. As more debris 86 collects on the collection airfoil 74, the buildup of debris 86 will bind with more debris 86. By reducing the amount of debris 86 that passes through the diffuser 60, less debris 86 will reach the combustor 56 where the debris 86 can plug cooling holes 92 in a surface of the combustor 56.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A diffuser (60) for a gas turbine engine (20) comprising:
an annular fluid passage (62) fluidly connecting a diffuser inlet (66) to a diffuser outlet (67); and
a plurality of airfoils (74) located in the annular fluid passage (62) and each having debris collection means, **characterised in that**:
the debris collection means includes a surface adhesion treatment (88) included on a leading edge (80) of each of the plurality of airfoils (74).

2. The diffuser (60) of claim 1, wherein the plurality of airfoils (74) extend in a circumferential direction through the annular fluid passage (62).

3. The diffuser (60) of claim 2, wherein the plurality of airfoils (74) are supported by struts (78) extending in a radial direction through the annular fluid passage (62).

4. The diffuser (60) of claim 3, wherein the struts (78) include a strut collection surface.

5. The diffuser (60) of any preceding claim, wherein the debris collection means includes a resistive heat strip (90) included on a leading edge (80) of each of the airfoils (74).

6. The diffuser (60) of any of claims 1 to 4, wherein the debris collection means includes a bleed air passage (91) included on a leading edge (80) of each of the airfoils (74).

7. The diffuser (60) of any preceding claim, wherein a cross-sectional area of the plurality of airfoils (74) is greater than 50% of the cross-sectional area of the annular fluid passage (62).

8. The diffuser (60) of any preceding claim, wherein the debris collection means includes a recess (84) defined by a pair of leading edge protrusions included on the leading edge (80) of each of the plurality of airfoils (74), optionally the recess (84) extends in one of a radial or circumferential direction.

9. The diffuser (60) of any preceding claim, wherein the plurality of airfoils (74) are removable from the diffuser (60).

10. A gas turbine engine (20) comprising:
a compressor section (24) including a downstream most rotor (64);
a combustor section (26) located axially downstream of the compressor section (24);
the diffuser (60) of any preceding claim located axially downstream from the downstream most rotor (64) and axially upstream of the combustor section (26), the diffuser (60) further including:
at least one fluid splitter (72) located axially upstream and spaced from the plurality of airfoils (74).

11. The gas turbine engine (20) of claim 10, wherein the plurality of airfoils (74) include an upstream portion having a greater thickness than the trailing edge (80) of each of the plurality of airfoils (74) and there are a greater number of the plurality of airfoils (74) than the at least one splitter (72).

12. A method of collecting debris (86) entering a gas turbine engine (20) comprising:
locating a plurality of airfoils (74) in an annular fluid passage (62) of a diffuser (60), wherein the diffuser (60) is located axially between a compressor section (24) and a combustor section (26); and
collecting debris (86) traveling through the diffuser (60), **characterised in that**:
the debris (86) is collected on a leading edge (80) of the plurality of airfoils (74) by changing a direction of flow of fluid traveling over the plurality of airfoils (74), and the method further comprises heating the plurality of airfoils (74) to promote debris (86) to collect on the leading edge (80).

13. The method of claim 12, wherein a cross-sectional area of the plurality of airfoils (74) is greater than or equal to 50% of a cross-sectional area of the annular fluid passage (62) and the plurality of airfoils (74) include an upstream portion having a greater thickness than a trailing edge (80).

14. The method of claim 12 or 13, further comprising manipulating a flow of air entering the diffuser (60) with at least one splitter (72) located axially forward and spaced from the plurality of airfoils (74) and there are a greater number of the plurality of airfoils (74) than the at least one splitter (72).

15. The diffuser (60), gas turbine engine (20) or method of any preceding claim, wherein the annular fluid passage (62) includes a high velocity region (68) having a cross-sectional area that is axially upstream of a diffusion region having a larger cross-sectional area than the high velocity region (68) and the plurality of airfoils (74) are located in the high velocity region (68).

## Patentansprüche

1. Diffusor (60) für ein Gasturbinentriebwerk (20), umfassend:
einen ringförmigen Fluiddurchgang (62), der einen Diffusoreinlass (66) fluidisch mit einem Diffusorauslass (67) verbindet; und
eine Vielzahl von Schaufelprofilen (74), die sich in dem ringförmigen Fluiddurchgang (62) befinden und jeweils ein Schmutzsammelmittel aufweisen, **dadurch gekennzeichnet, dass**:
das Schmutzsammelmittel eine Oberflächenadhäsionsbehandlung (88) beinhaltet, die an einer Vorderkante (80) jedes der Vielzahl von Schaufelprofilen (74) eingeschlossen ist.

2. Diffusor (60) nach Anspruch 1, wobei sich die Vielzahl von Schaufelprofilen (74) in Umfangsrichtung durch den ringförmigen Fluiddurchgang (62) erstreckt.

3. Diffusor (60) nach Anspruch 2, wobei die Vielzahl von Schaufelprofilen (74) durch Streben (78) abgestützt wird, die sich in radialer Richtung durch den ringförmigen Fluiddurchgang (62) erstrecken.

4. Diffusor (60) nach Anspruch 3, wobei die Streben (78) eine Strebensammeloberfläche beinhalten.

5. Diffusor (60) nach einem der vorhergehenden Ansprüche, wobei das Schmutzsammelmittel einen Widerstandsheizstreifen (90) beinhaltet, der an einer Vorderkante (80) jedes der Schaufelprofile (74) eingeschlossen ist.

6. Diffusor (60) nach einem der Ansprüche 1 bis 4, wobei das Schmutzsammelmittel einen Zapfluftdurchgang (91) beinhaltet, der an einer Vorderkante (80) jedes der Schaufelprofile (74) eingeschlossen ist.

7. Diffusor (60) nach einem der vorhergehenden Ansprüche, wobei eine Querschnittsfläche der Vielzahl von Schaufelprofilen (74) größer als 50 % der Querschnittsfläche des ringförmigen Fluiddurchgangs (62) ist.

8. Diffusor (60) nach einem der vorhergehenden Ansprüche, wobei das Schmutzsammelmittel eine Aussparung (84) beinhaltet, die durch ein Paar von Vorderkantenvorsprüngen definiert ist, die an der Vorderkante (80) jedes der Vielzahl von Schaufelprofilen (74) eingeschlossen sind, wobei sich die Aussparung (84) optional in einer von einer Radial- oder einer Umfangsrichtung erstreckt.

9. Diffusor (60) nach einem der vorhergehenden Ansprüche, wobei die Vielzahl von Schaufelprofilen (74) von dem Diffusor (60) lösbar ist.

10. Gasturbinentriebwerk (20), umfassend:
einen Verdichterabschnitt (24), der einen am weitesten stromabwärts gelegenen Rotor (64) beinhaltet;
einen Brennkammerabschnitt (26), der sich axial stromabwärts von dem Verdichterabschnitt (24) befindet;
wobei sich der Diffusor (60) nach einem der vorhergehenden Ansprüche axial stromabwärts von dem am weitesten stromabwärts gelegenen Rotor (64) und axial stromaufwärts von dem Brennkammerabschnitt (26) befindet, wobei der Diffusor (60) ferner Folgendes beinhaltet:
mindestens einen Fluidverteiler (72), der sich axial stromaufwärts von der Vielzahl von Schaufelprofilen (74) befindet und von dieser beabstandet ist.

11. Gasturbinentriebwerk (20) nach Anspruch 10, wobei die Vielzahl von Schaufelprofilen (74) einen stromaufwärts gelegenen Abschnitt mit einer größeren Dicke als die Hinterkante (80) jedes der Vielzahl von Schaufelprofilen (74) beinhaltet und es eine größere Anzahl von der Vielzahl von Schaufelprofilen (74) als der mindestens eine Verteiler (72) gibt.

12. Verfahren zum Sammeln von Schmutz (86), der in ein Gasturbinentriebwerk (20) gelangt, umfassend:
Positionieren einer Vielzahl von Schaufelprofilen (74) in einem ringförmigen Fluiddurchgang (62) eines Diffusors (60), wobei sich der Diffusor (60) axial zwischen einem Verdichterabschnitt (24) und einem Brennkammerabschnitt (26) befindet; und
Sammeln von Schmutz (86), der durch den Diffusor (60) wandert, **dadurch gekennzeichnet, dass**:
der Schmutz (86) an einer Vorderkante (80) der Vielzahl von Schaufelprofilen (74) durch Ändern der Strömungsrichtung des Fluids gesammelt wird, das über die Vielzahl von Schaufelprofilen (74) fließt, und wobei das Verfahren ferner Erhitzen der Vielzahl von Schaufelprofilen (74) umfasst, um zu begünstigen, dass sich Schmutz (86) an der Vorderkante (80) sammelt.

13. Verfahren nach Anspruch 12, wobei eine Querschnittsfläche der Vielzahl von Schaufelprofilen (74) größer oder gleich 50 % einer Querschnittsfläche des ringförmigen Fluiddurchgangs (62) ist und die Vielzahl von Schaufelprofilen (74) einen stromaufwärts gelegenen Abschnitt beinhaltet, der eine größere Dicke als eine Hinterkante (80) aufweist.

14. Verfahren nach Anspruch 12 oder 13, ferner umfassend Manipulieren eines in den Diffusor (60) eintretenden Luftstroms mit mindestens einem Verteiler (72), der sich axial vor der Vielzahl von Schaufelprofilen (74) befindet und von dieser beabstandet ist, und wobei es eine größere Anzahl von der Vielzahl von Schaufelprofilen (74) als der mindestens eine Verteiler (72) gibt.

15. Diffusor (60), Gasturbinentriebwerk (20) oder Verfahren nach einem der vorhergehenden Ansprüche, wobei der ringförmige Fluiddurchgang (62) einen Hochgeschwindigkeitsbereich (68) mit einer Querschnittsfläche beinhaltet, die axial stromaufwärts von einem Diffusionsbereich mit einer größeren Querschnittsfläche als der Hochgeschwindigkeitsbereich (68) liegt, und sich die Vielzahl von Schaufelprofilen (74) in dem Hochgeschwindigkeitsbereich (68) befindet.

## Revendications

1. Diffuseur (60) pour un moteur à turbine à gaz (20) comprenant :
un passage de fluide annulaire (62) reliant fluidiquement une entrée de diffuseur (66) à une sortie de diffuseur (67) ; et
une pluralité de profils aérodynamiques (74) situés dans le passage de fluide annulaire (62) et ayant chacun des moyens de collecte de débris, **caractérisé en ce que** :
les moyens de collecte de débris comportent un traitement d'adhérence de surface (88) inclus sur un bord d'attaque (80) de chacune de la pluralité de profils aérodynamiques (74).

2. Diffuseur (60) selon la revendication 1, dans lequel la pluralité de profils aérodynamiques (74) s'étendent dans une direction circonférentielle à travers le passage de fluide annulaire (62).

3. Diffuseur (60) selon la revendication 2, dans lequel la pluralité de profils aérodynamiques (74) sont supportés par des entretoises (78) s'étendant dans une direction radiale à travers le passage de fluide annulaire (62).

4. Diffuseur (60) selon la revendication 3, dans lequel les entretoises (78) comportent une surface de collecte d'entretoises.

5. Diffuseur (60) selon une quelconque revendication précédente, dans lequel les moyens de collecte de débris comportent une bande thermique résistive (90) incluse sur un bord d'attaque (80) de chacun des profils aérodynamiques (74).

6. Diffuseur (60) selon l'une quelconque des revendications 1 à 4, dans lequel les moyens de collecte de débris comportent un passage d'air de prélèvement (91) inclus sur un bord d'attaque (80) de chacun des profils aérodynamiques (74).

7. Diffuseur (60) selon une quelconque revendication précédente, dans lequel une surface en coupe transversale de la pluralité de profils aérodynamiques (74) est supérieure à 50 % de la surface en coupe transversale du passage de fluide annulaire (62).

8. Diffuseur (60) selon une quelconque revendication précédente, dans lequel les moyens de collecte de débris comportent un évidement (84) défini par une paire de saillies de bord d'attaque incluses sur le bord d'attaque (80) de chacune de la pluralité de profils aérodynamiques (74), facultativement, l'évidement (84) s'étend dans l'une d'une direction radiale ou circonférentielle.

9. Diffuseur (60) selon une quelconque revendication précédente, dans lequel la pluralité de profils aérodynamiques (74) sont amovibles du diffuseur (60).

10. Moteur à turbine à gaz (20) comprenant :
une section de compresseur (24) comportant un rotor le plus en aval (64) ;
une section de chambre de combustion (26) située axialement en aval de la section de compresseur (24) ;
le diffuseur (60) selon une quelconque revendication précédente situé axialement en aval du rotor le plus en aval (64) et axialement en amont de la section de chambre de combustion (26), le diffuseur (60) comportant en outre :
au moins un séparateur de fluide (72) situé axialement en amont et espacé de la pluralité de profils aérodynamiques (74) .

11. Moteur à turbine à gaz (20) selon la revendication 10, dans lequel la pluralité de profils aérodynamiques (74) comportent une partie amont ayant une plus grande épaisseur que le bord de fuite (80) de chacun de la pluralité de profils aérodynamiques (74) et il y a un plus grand nombre de la pluralité de profils aérodynamiques (74) que l'au moins un séparateur (72).

12. Procédé de collecte de débris (86) entrant dans un moteur à turbine à gaz (20) comprenant :
le placement d'une pluralité de profils aérodynamiques (74) dans un passage de fluide annulaire (62) d'un diffuseur (60), dans lequel le diffuseur (60) est situé axialement entre une section de compresseur (24) et une section de chambre de combustion (26) ; et
la collecte des débris (86) traversant le diffuseur (60), **caractérisé en ce que** :
les débris (86) sont collectés sur un bord d'attaque (80) de la pluralité de profils aérodynamiques (74) en changeant une direction d'écoulement de fluide se déplaçant sur la pluralité de profils aérodynamiques (74), et le procédé comprend en outre le chauffage de la pluralité de profils aérodynamiques (74) pour favoriser la collecte des débris (86) sur le bord d'attaque (80).

13. Procédé selon la revendication 12, dans lequel une surface en coupe transversale de la pluralité de profils aérodynamiques (74) est supérieure ou égale à 50 % d'une surface en coupe transversale du passage de fluide annulaire (62) et la pluralité de profils aérodynamiques (74) comporte une partie amont ayant une épaisseur supérieure à un bord de fuite (80).

14. Procédé selon la revendication 12 ou 13, comprenant en outre la manipulation d'un flux d'air entrant dans le diffuseur (60) avec au moins un séparateur (72) situé axialement vers l'avant et espacé de la pluralité de profils aérodynamiques (74) et il y a un plus grand nombre de plusieurs profils aérodynamiques (74) que l'au moins un séparateur (72).

15. Diffuseur (60), moteur à turbine à gaz (20) ou procédé selon une quelconque revendication précédente, dans lequel le passage de fluide annulaire (62) comporte une région à grande vitesse (68) ayant une surface en coupe transversale qui est axialement en amont d'une région de diffusion ayant une surface de coupe transversale plus grande que la région à grande vitesse (68) et la pluralité de profils aérodynamiques (74) sont situés dans la région à grande vitesse (68).
